(19) Europäisches Patentamt
European Patent Office
Office européen des brevets

(11) Publication number: **0 149 307 B1**

(12) # EUROPEAN PATENT SPECIFICATION

(45) Date of publication of patent specification: **24.08.94**

(51) Int. Cl.5: **B01D 45/06**, B01D 46/24, F28D 1/053

(21) Application number: **84307512.8**

(22) Date of filing: **31.10.84**

(54) **Fluid treating.**

(30) Priority: **09.01.84 US 569270**

(43) Date of publication of application:
**24.07.85 Bulletin 85/30**

(45) Publication of the grant of the patent:
**24.08.94 Bulletin 94/34**

(84) Designated Contracting States:
**AT BE CH DE FR GB IT LI LU NL SE**

(56) References cited:
**DE-C- 328 826**

**PATENT ABSTRACTS OF JAPAN, vol. 1, no. 157 (C-77), 14th December 1977, p. 3373, C 77; & JP - A - 52 96973 (BABCOCK HITACHI K.K.) 15-08-1977**

(73) Proprietor: **Lerner, Bernard J.**
**727 Orchard Hill Drive**
**Pittsburgh Pennsylvania 15238 (US)**

(72) Inventor: **Lerner, Bernard J.**
**727 Orchard Hill Drive**
**Pittsburgh Pennsylvania 15238 (US)**

(74) Representative: **JENSEN & SON**
**70 Paul Street**
**London EC2A 4NA (GB)**

EP 0 149 307 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Background of the Invention

This invention relates to the processing or treatment of fluids in such operations as mass transfer, heat transfer in heat exchangers, liquid-gas contacting, and separation of contaminant particulate, mist and fume from gases. This invention has particular relationship to such treatment of fluids with an array of sets of elements in rows with the elements in any row being staggered with respect to the elements in adjacent rows. The word "element" as used in this application means an element, usually an elongated element, of any transverse cross-sectional shape. The word "element" includes within its meaning cylindrical elements which are hollow or solid such as tubes or rods. Cylindrical elements have advantages in the treatment of fluids. The word "cylindrical" is used here in its broad sense. A cylinder is defined as a three-dimensional surface formed by tracing a plane continuous closed curve with a line perpendicular to the plane of the curve.

Staggered tubular arrays have been used for various industrial purposes. For example in cross-flow heat exchangers, fluid to be heated or cooled flows perpendicularly to a staggered-tube array in which the tubes are arranged in a triangular pitch or rotated-square array. Typical values of tube pitch for common heat-exchanger tube layouts are given on page 10-26 of Chapter 10, "Thermal Design of Heat-Transfer Equipment" in Perry's Chemical Engineers' Handbook, 5th Edition, McGraw-Hill (New York). Similar staggered tube or rod arrays have also been employed for gas cleaning and mass transfer.

Gas demisting and particulate-removal applications of arrays of cylindrical impingement rods of elliptical and streamlined, transverse cross-section are described in British Patents, Talboys GB-A-562,593, General Dynamics GB-A-897,417 and Lerner GB-A-1,594,524. British Patent GB-A-644,391 describes a particulate filter comprising a staggered array of elements of streamlined, transverse cross-sectional shape fabricated from perforated sheet or gauze. Talboys and Smith, in British Patent GB-A-562,593, and German Patent DE-C-328326, Allgemeine Elektricitat-Gesellschaft discloses an array of spaced parallel tubes for removing dust and impurities from air in which the tubes are perforated or foraminous and are covered with sleeves of woven cloth which are kept wetted with water in the case of AEG and oil in the case of Talboys and Smith. These tubes are of cylindrical or elliptical, transverse cross-section. General Dynamics, in British Patent GB-A-897,417, discloses a mist eliminator array of impingement rods of streamlined, transverse cross-section covered with a water-absorbent material. Lerner, in British Patent GB-A-1,594,524, describes the application of a staggered array of fibrous cylinders for gas absorption, mist and particulate removal. Andersen, in U.S. Patent US-A-3,447,287, discloses an incinerator scrubber containing a horizontal array of staggered rows of porous refractory cylindrical impingement piers oriented perpendicularly to the path of gas flow. Ekman, in U.S.-A-3,795,486, describes a wet scrubber comprising a horizontal array of rod-like elements for absorbing sulfur oxides. Staggered arrays of other types are shown in Heenan & Froude, French Patent FR-B-531,515. The instant invention concerns itself with, and is applicable to, the arrays disclosed in the above-described patents and literature which are typical of the prior art.

In most, if not all, of the above-described applications of staggered arrays of elements, the elements in the rows are spatially separated from each other and from the elements of the adjacent rows so that open flow space completely surrounds each element. A disadvantage of the prior-art staggered arrays is that they are not fully effective or efficient in the treatment or processing of the fluids which are passed through them. Heretofore, the cause of this deficiency in effectiveness and efficiency has not been realised or know.

Staggered element arrays are usually so arranged that from the fluid approach point, or direction perpendicular to the array, the fluid "sees" nothing but element surface; i.e., there is not open, unobstructed flow area on a projected view. The conventional wisdom on which such an arrangement is based is that all fluid will impinge on, flow around, and contact each element. While this is the desired and desirable objective, it has not been realised in the prior-art open array arrangement of elements.

Japanese publication 52,96973 Fujine teaches that blow-through occurs in a mist removal device which consists only of tubes reducing the effectiveness of the device and that to increase the effectiveness of the mist eliminator, the radius of the tubes must be increased or the pitch must be reduced or the number of steps in an array of the tubes must be increased. Fujine teaches that these remedies increase the flow resistance, increase costs and complicate cleaning. Fujine proposes to include plate demister elements with the tubes in the array to eliminate these shortcomings. Because of the proliferation of demister plates in Fujine and their disposition, the treated fluid in Fujine is confined to channels precluding mixing of the stream of the fluid to achieve uniformity and, also, introducing high resistance which may be lower than if demister tubes replaced the plates but is still substantial.

It is an object of this invention to overcome the disadvantages of the above-described prior art and to provide treatment or processing apparatus for fluids, including a staggered array of elements, in whose use the treatment shall be effectively and efficiently carried out.

## Summary of the Invention

This invention arises from the discovery that in prior-art arrays there are open by-pass paths for the fluids to be treated between the elements. These by-pass paths are along the diagonals of the array; i.e., they are at an acute angle to the downstream direction of fluid flow. These by-pass paths offer minimum flow resistance to the fluids as compared to the alternate paths incident on the elements and a significant portion of the total fluid bypasses through these open diagonal channels. In Heenan & Froude, the by-pass paths are blocked by elements such as are shown in its Fig. 6. However, this is achieved by closely spacing channel-shaped elements in high-flow resistance relationship. Not only is any potential by-pass flow blocked, but the flow as a whole is blocked so that the pressure drop in a fluid passing through the array is high imposing an economic penalty which is not acceptable. This is particularly true for fluids flowing at a high velocity; e.g., gases at (152.4 to 609.6 m/min) 500 to 2,000 feet/minute, so that high flow-resistance apparatus such as those disclosed by Heenan & Froude are, at best, economically limited to applications where the velocities are in the low ranges, substantially below 152.4m/min (500 ft/min). In Fujine bypass flow is blocked by the plates, but the plates also confine the fluid to separate channels.

According to the present invention there is provided an apparatus for treating fluids for liquid-gas contacting, for removing particulate, mist or fumes from fluids, or for transferring heat or mass between fluids, the said fluids flowing predominantly in a predetermined direction, the apparatus including separate cylindrical elements arrayed in a plurality of rows, the elements in said rows being substantially perpendicular to said predetermined direction, and the respective elements of adjacent rows being staggered with respect to one another, the elements of each row being spatially separated from each other and from the elements of adjacent rows; the said apparatus being characterised by that diagonal bypass flow of said fluid is prevented by partitions bridging between at least a plurality of pairs of certain of said elements and extending generally parallel to said predetermined direction, the bridging of each pair by a partition being between a pair of elements in alternate rows, each said partition being substantially in contact with the outer surfaces of the elements of each said pair which it bridges along the lengths of said bridged elements to interpose substantially complete obstruction to said diagonal bypass flow, there being no row from the surfaces of whose said elements more than one said partition extends.

In accordance with this invention, there is also provided a method of liquid-gas contacting for mass interchange between a gas and a liquid with apparatus as described above but with the elements in the rows positioned generally horizontally and the partitions not penetrating into the elements between which they extend; which method includes conducting the gas and the liquid generally vertically through an array of rows of elements with a partition interposed between certain of said elements to suppress crossflow through said array; said gas being conducted upwardly and said liquid being conducted downwardly, reacting said gas and liquid to produce mass interchange, and conducting away separately said reacted gas and said liquid modified by the mass interchange; the said method being characterised by that the gas is conducted at so high a velocity as to maintain retention of the liquid in a pool in the elements and that the gas and liquid are reacted in the pool with the gas bubbling in the pool.

In accordance with this invention, the by-pass flow is suppressed by partitions extending from the elements of a staggered array for treating or processing a fluid. Usually the elements of successive rows overlap so that the gas flowing into an array sees a continuous surface of elements. To achieve the desired low resistance, each partition is positioned so that its surfaces are generally parallel to the direction of flow. These surfaces may be planar or curvilinear, for example, corrugated; planar surfaces are preferred. Each partition is also thin compared to the spacing between the outer surfaces of the elements between which the partition passes. Typically, the partition thickness is between 5 and 25% of this spacing and is preferably 5 to 15%. The partitions extend substantially along the whole length of the elements. A partition may extend from each of the elements of the array or from a sufficient number of elements of the array to reduce the by-pass flow sufficiently to render the array effective and efficient in processing or treating the fluid. The reference in a claim of this application to the presence of partitions between pairs of elements of a staggered array means that the partitions need not be present between all pairs of elements, but only between a sufficient number of pairs for effective treatment of the fluid. Each partition bridges between two elements of alternate rows. A row is defined as a line or an array of elements generally perpendicular or transverse to the direction of flow of the fluid. It is desirable that

each partition should be positioned so that the elements of the intervening row between which it passes are symmetrically spaced. The distances between the longitudinal center plane of a partition and the centers of the elements between which it passes should be substantially equal. This symmetry is desirable so that the minimum flow area in the direction of the flow on each side of the partition is substantially equal. If these areas are unequal, the greater area will conduct more fluid-flow and the processing of the fluid is not uniform. Where there are more than two rows, each partition extends between elements in alternate rows. Each partition is joined to both of these elements.

While the elements in the rows of the array may have transverse cross-section shapes of different form, for example, such as are disclosed in Heenan & Froude, staggered arrays with cylindrical elements have the marked advantage that they impose lower fluid-flow pressure drop. In addition, arrays with cylindrical elements are more frequently encountered than arrays of other types. In industrial operations such as heat transfer, the elements of the arrays are inherently cylindrical tubes.

The arrays in accordance with this invention have an advantage in addition to the advantage that they suppress by-pass flow. The eddies formed in the wake of the fluid flowing between each element and the partitions on each side of it, enhance the rate for mass transfer to and from the surfaces of the partitions and the elements.

The elements may be foraminous or filamentary, which has advantages in applications involving two-phase gas-liquid flow through the array of elements, combining inertial mechanisms with filtration or bubbling flow. When tubular perforated or foraminous transverse segments are used for the element array, bubbling flow is achieved in either concurrent or countercurrent gas-liquid flow at high gas velocities. The apparatus is effective at a wide range of fluid velocities and, the apparatus may be used for gas velocities of from 500 to 2,000 feet/minute (152.4-609.6 m/min) for mass transfer and conventional particulate and mist removal, and from 1,000 to 20,000 feet/minute (304.8 to 6096 m/min) for very fine particulate, aerosol and fume removal.

## Brief Description of the Drawings

For a better understanding of this invention, both as to its organization and as to its method of operation, together with additional objects and advantages thereof, reference is made to the following description, taken in connection with the accompanying drawings, in which:

Figure 1 is a plan view of a staggered array of fluid-treating or processing apparatus showing an embodiment of this invention;

Figure 2 is a diagrammatic fragmental view showing the manner in which the rate of mass transfer is increased in the practice of this invention;

Figure 3 is a graph which, in connection with Figure 3, aids in the understanding of the manner in which the rate of mass transfer is increased in the practice of this invention;

Figure 4 is a diagrammatic view showing test apparatus used in investigating the treatment of fluids in the practice of this invention;

Figure 5 is a diagrammatic view showing apparatus for removing fly-ash from a liquid in the practice of this invention;

The dimensions shown in Figs. 1, 2 and 4 are included only for the purpose of aiding those skilled in the art in practicing this invention and not with any intention of in any way limiting this invention.

## Detailed Description of Embodiments

The apparatus shown in Fig. 1 includes a staggered array 21 of cylinders 23. Typically, each cylinder 23 includes a shell 24 supporting a cylindrical-layer 26 of knitted mesh typically of polypropylene or stainless steel. Typically, the length of the cylinders 23 may be between 1/2 foot (15.24 cms) and 5 feet (152.4 cms). The array 21 includes a plurality of rows 25 and 27 of the cylinders 23, the rows 25 alternating with the rows 27. The cylinders 23 of rows 25 are staggered with respect to the cylinders of the rows 27. The cylinders 23 are generally uniformly spaced or distributed over the array; i.e., the spacings between the centers of adjacent cylinders 23 in each row 25 and 27 are substantially equal and the spacings between the lines through the centers of the cylinders of adjacent rows 25 and 27 are substantially the same and the lines between the centers of cylinders in alternate rows 25 and 27 substantially bisect the lines between the centers of the adjacent cylinders 23 of the adjacent rows 27 and 25. Partitions 29 extend or bridge between the cylinders 23 of alternate rows 25-25 and 27-27. Typically, the partitions 29 are composed of thin sheets of metal or plastic, typically polypropylene. The partitions 29 extend substantially along the whole length of the cylinders 23. Each partition 29 has a thickness which is small compared to the minimum distance or spacing between the outer surfaces of the pair of elements of the row intervening between the alternate rows whose elements the partition bridges. Typically, the thickness of the partition is about 5 to 25% and preferably 5 to 15% of the spacing. The spacing which is compared to the thickness is the minimum spacing S of the surfaces

of the elements 23 which face the partition.

The array 21 is mounted in a duct typically of plastic or metal. The duct is of generally rectangular, transverse cross-section and has side walls 31 and top and bottom walls (not shown). Semi-cylinders 33 of rows 25 abut the side walls 31.

The fluid being processed flows through the duct and the array 21 in the direction of the arrow 35 generally perpendicularly or transversely to the rows 25 and 27. With the cylinders 23 in the rows 25 and 27 spaced as shown in Fig. 1, the fluid sees a solid wall formed of the cylindrical surfaces. Typically, the fluid may be air or other gas containing a contaminant particulate which it is desired to remove. Typically, liquid, usually water, is sprayed into the gas by appropriately positioned spray nozzles 37.

The partitions 29 are interposed in the diagonal by-pass paths 39 which exist between adjacent cylinders 23 along the successive rows; e.g., between cylinders 23a-23b of rows 25 and 23c-23d of rows 27. The partitions suppress by-pass flow. The partitions have plane surfaces generally parallel to the direction 35. It is desirable that each partition 29 be generally centered along the line between the centers of the cylinders 23 between which it extends. Under such circumstances, the adjacent cylinders 23 between which the partition passes are positioned symmetrically with respect to each partition. For example, cylinders 23a and 23b are positioned symmetrically with respect to partition 29a.

The contaminated gas flows through and around the cylinders 23 as shown by the arrows 41, 43 and 45. Because of the symmetric spatial relationship of the partitions 29 and the cylinders 23, the streams which emerge from and pass around an upstream cylinder 23e are merged into common streams 47 and 49 flowing generally symmetrically with respect to the baffle 29b downstream from cylinder 23e. These streams 47 and 49 pass through and around the cylinder 23f downstream from cylinder 23e. This cylinder 23f being the most downstream cylinder of the array 21, the streams 51, 55 and 57 merge into a unitary stream 59. The cylinders 23 and the baffles 29 capture the particulate from the gas and drain it together with captured liquid into a container (not shown). Because of the generally uniform distribution and the generally symmetric positioning, with respect to the partitions, of the cylinder 23, the processing of the fluid is uniform throughout the extent of the array perpendicularly to the direction 35.

In addition to improved effectiveness and efficiency by suppression of diagonal by-pass flow of the processed fluid, this invention yields unexpected and surprising benefits. In a study of the effect of single stationary objects placed in the fluid stream on mass transfer rates to the walls of a coaxial cylindrical tube, Koncar-Kjurdjevic and Dudukovic, American Institute of Chemical Engineers Journal, Vol. 23, p. 125 (1977) and ibid, Vol. 25, pp. 895-899 (1979) found that the wake of the stationary object (sphere or concentric disk) produced two maxima in mass transfer, as measured by the Sherwood number, Sh.

$$Sh = \frac{(k)(d)}{D},$$

where

k = mass transfer coefficient,

d = hydraulic radius of flow channel,

D = diffusion coefficient.

The Sherwood Number is a measure of the transport or mass transfer to the surface from the fluid or from the surface to the fluid. It was found that the first local maximum resulted from two effects: the narrowing of the effective cross-section available for flow and the velocity component perpendicular to the wall which is imparted to the fluid as it flows through the constriction. The second local maximum was the result of wake formation and its interaction with the boundary layer of fluid at the wall. Owing to the instability and separation of the wake behind the object causing the initial flow constriction, the intensity of turbulent pulsations increases in the wake causing fluid elements to penetrate into the diffusion sublayer on the wall, which leads to a rapid increase of the local Sherwood Number.

These investigators, Koncar-Kjurdjevic et al., found that the ratio of the downstream Sherwood Number with the sphere or disk obstruction in the coaxial tube to the Sherwood Number in the empty tube was, on average, greater than 1.0, and in most cases, more than 2.0. The wake effect therefore doubles normal transfer rates to (and from) the walls. Heat, mass and momentum transfer in the turbulent fluid flow regime are all governed by a common mechanism: the motion of turbulent eddies. To the extent that turbulent fluid eddy motion can be mathematically described, either by theoretical or experimental means, heat and mass transfer coefficients and frictional (momentum) losses may be derived. These fundamental relationships comprise the "analogy" between heat, mass and momentum transfer. A full review of the theoretical and experimental development of the analogy between heat, mass and momentum transfer is given by W.S. Norman, "Absorption, Distillation and Cooling Towers", John Wiley & Sons, New York, 1961, pp. 35-41. Because they are controlled by a common mechanism of eddy transfer in turbulent fluid flow, heat and mass transfer rate coefficients may be calculated, one from the other. The relationship is usually stated in terms of the dimensionless groups, the Sherwood Number, Sh, for mass transfer and the Stanton Number, St, for heat transfer.

A doubling of the Sherwood Number by an eddy-inducing device would also result in a similar increment in the Stanton Number for heat transfer. Thus, the array of this invention which incorporates the wake effect, enhances transfer rates for heat and mass by factors greater than 1.0, that is, for more than the contact area added by the bridging walls. Thus, heat exchanger arrays, partitioned according to this invention, will have, on average, twice the transfer coefficient of a unit having the same area entirely in straight wall surface with parallel fluid flow.

The above-described improvement in mass transfer is illustrated in Figs. 2 and 3. Fig. 2 shows an assembly including a tube or disk 151 positioned between walls 153 and 155. Fluid 157 is conducted through this assembly. Between the disk 151 and the walls, the fluid path is constricted. The fluid 157 is squeezed Into the constricted region 159 and its velocity is increased. After the fluid leaves the constricted regions 159, its velocity is reduced and eddies 160 form in its wake. The eddies 160 have a component of velocity perpendicular to the walls 153 and 155 and this component causes penetration of the layers 162 of fluid along the walls effecting mass or heat transfer.

In Fig. 3, the ratio,

$$\frac{Sh}{Sh_o},$$

is plotted vertically as a function of the distance from the entrance to the assembly which is plotted horizontally. Sh is the Sherwood Number of a system including the member 151 and the walls 153 and 155 and $Sh_o$ is the Sherwood Number for a system which does not include the member 151. The resulting curve shows a maximum, corresponding to the squeeze effect and a second, higher maximum corresponding to the wake effect as labeled.

The flow through the baffled array of this invention is not identical to the case of flow through a tube past a coaxial sphere or disk, but it is a very close analog. In plan cross-section; i.e., cross-section parallel to the plan view, the array of this invention is comprised of a multiple set of parallel flow passages,[analogous to the passages between 151 and 153 and 155 and 151 (Fig. 2)] each having the same plan section as the coaxial sphere in a tube studied by Koncar-Djurdjevic and Dudokovic. The wake effect and the walled benefits thereof are multiplied both laterally by the number of walled passages and in the fluid flow direction by the number of transverse "target" elements.

In the array of this invention, the bridging parallel partitions (29 Fig. 1 etc.) define the walls confining the flow of fluid impinging on the transverse "target" elements. While for both the conventional open (unpartitioned) array and the array of this invention, converging fluid flow is obtained as the fluid flows past the first row of transverse elements, in the open array the wake energy is dissipated as turbulent frictional losses. With the bridging partitions of this invention confining the flow through a set of two, three or more rows, (two rows 151-153, 151-155 and the third row outwardly at each element) the wake energy is controlled so that eddies normal to the wall are obtained for each successive wake generation by a transverse element or element section. This raises the average transfer coefficient beyond that of the single obstruction because of the multiple, in series, repeated wake generations.

The array of this invention also serves as a fluid mixer. The nature of the array of this invention is such that the fluid stream is repeatedly split and remixed with fluid flowing in alternate flow streams as it passes in the general flow direction through the array. Thus, fluid entering between two elements in the first row is split into two streams by the second row element and the respective first-third row partitions (29 Fig. 1 etc.). However, as fluid leaves the third row of elements, a different set of partition walls become effective as flow confining walls, and the two separated streams mix with two other adjacent streams. Not only is this effective for periodic mixing and redistribution in heat transfer as fluid flows through the array, but the array itself serves as an excellent static liquid mixing device.

## EXAMPLE I

The fluid treatment of Example I was carried out with the staggered array 162 shown in Fig. 4. This array includes four rows 163, 165, 167 and 169 of vertical plastic pipe 171 and 173 staggered in a triangular pitch. Each pipe 171 and 173 has an outside diameter of 1-5/16 inches (3.33 cm). The spacing between the centers of the pipes in alternate rows 163 and 167 and 165 and 169 is 3-3/4 inches (44.4 cm). The length of the pipes is 19-1/4 inches (48.9 cm). The distance between the centers of the pipes along the row is 2-1/8 inches (5.40 cm). There were 5-1/2 pipes per row. The pipes 173 of the third and fourth rows 167 and 169 which are positioned downstream with respect to the flow

of fluid are wrapped with a single layer 175 of thin fiberglass cloth (Hollingsworth and Vose Company, "Fibernetics"™ "Hovomat"™) to facilitate liquid filming in accordance with the teaching of British Patent General Dynamics 897,417.

The array 162 was used for demisting air flowing through a horizontal duct 177 having a 12-inch by 12-inch (30.48 by 30.48 cm) flow cross-sectional area. Air was blown through the test duct in the direction of the arrow 179 by means of a No. 15 Cincinnati centrifugal forced-draft blower (not shown) equipped with a 7.5 horsepower motor. The duct 177 and the array 161 were located approximately 6 feet (1,8 m) downstream of the blower. Mist was generated by means of a Bete Fog Nozzle Company Type TF6FCN spray nozzle 181 located 11 inches (28 cm) upstream from the test assembly. The spray nozzle 181 was operated at 100 psig 7.0 Kg/sq.cm to generate a well-atomized spray. At 100 psig 7.0 Kg/sq cm, the nozzle flow rate was 2.2 gallons (10 litres) per minute, and the nozzle was pointed upstream into the air flow so that only the finer mist particles carried back to the mist eliminator 162.

The array 162 was inserted in the duct 177 with the pipes 171 and 173 in the vertical position, and perpendicular to the air flow direction 179. The piping array was tested for pressure drop and mist elimination at varying air velocities. Air velocity was measured by means of pitot tube 183, traverses and pressure drop across the test module by means of an inclined manometer 185. Mist penetration was visually observed by means of the Tyndall effect, using a light beam 187 normal to exit gas flow with the room darkened.

With the test array sans the partitions as taught by this invention, a fine mist penetration was immediately observed by Tyndall effect at the lowest measurable air velocity of 423 feet/minute (128.9 m/min). This fine mist loading visibly continuously increased as the air velocity was increased to 1,042 feet/minute (317.6 m/min). Large-drop penetration of 0.01-0.1 inch (0.0254 - .254 cm) diameter size drops was not observed until the 700-800 feet/minute (213 - 243.84) range of gas velocity. This large-drop loading also increased with air velocity increase from 750 to 1,042 feet/minute (228.6 - 317.6 m/min). The array 162 therefore was ineffective in removing fine mist at all measured velocities down to 423 feet/minute 128.9 m/min, and was ineffective for large-drop mist removal above about 750 feet/minute 228.6 m/min.

The array 162 was then modified to accord with the teachings of this invention. Polypropylene partitions 189, 2-3/8 inches (6.03 cm) wide and 1/8 inch (0.32 cm) thick, were mounted between alternate pipes 171 and 173. The partitions 189 were centered on the center lines between the pipes 171 and 173 and extended along the length of the pipes. The array in accordance with this invention was then positioned in the duct 177 and operated as a mist eliminator at air velocities between 455 and 1,140 feet/minute (138.7 to 347.5 m/min). Tyndall beam observation of the exhaust air showed no trace of visible fine mist penetration over the full range of velocities tested. Larger droplet penetration did not begin until an air velocity of 1,042 feet/minutes (317.6 m/min) and did not become significant until 1,140 feet/minute (347.5 m/min), at which point the test was terminated.

The success of the partitioned array in preventing the fine mist droplet penetration shown by the conventional unpartitioned array clearly demonstrates the superiority of the partition array of this invention. The elimination of diagonal channel gas bypassing by the partitions in accordance with this invention not only prevents fine mist penetration, but also elevates the air velocity at which large liquid drops first carry over. The pressure drop for the "partitioned" array was 1.35 inches (3.43 cm) water column at 1,042 feet/minute (317.6 m/min) air flow, as against 0.75 inches (1.90 cm) water column at the same air velocity for the unpartitioned array. Because gas pressure drop in the turbulent-flow regime is approximately proportional to the square of gas velocity, the ratio of pressure drops indicates that approximately 34 percent of the gas flow in the unpartitioned array bypasses along open diagonals at 1,042 feet/minute (317.6 m/min). The incremental pressure drop obtained for the array of this invention as compared to an open unbaffled array results both from the elimination of the bypass flow and the increase in wake turbulence intensity behind the transverse elements. These two effects are interdependent, inasmuch as blocking diagonal bypass flow would increase the normal linear gas velocity approaching the second and consecutive rows of transverse wake-generating elements, thus causing increased wake turbulence eddying intensity. The influence of wake eddy turbulence on augmenting both drop agglomeration and impingement on the wall can be seen in the results from the above tests. It should be noted that because the liquid mist load on the test cell is a function of linear gas velocity, the large-drop re-entrainment point corresponds to an abnormally high liquid load and is a liquid drainage rate limit, not an inherent efficiency limitation of the device. The true mist removal effective velocity limit of the apparatus of this invention is therefore more than 1,042 feet/minute (317.6 m/min).

## EXAMPLE II

In this example, apparatus in accordance with this invention was used for fly-ash removal from air

by wet scrubbing. The apparatus 191 for carrying out this treatment is shown in Fig. 5. This apparatus 191 includes a vertical duct 193 having a 6-7/8 inch (17.46 cm) square flow cross-sectional area. A staggered triangular array 195 is interposed in this duct with a two-feet (60.96) long, clear duct-run section above and below the array. The top of the vertical square duct run transitions to a 13 square inch (83.9 sq.cm) air inlet section 196.

This array 195 includes 1/2-inch (1.27 cm) diameter schedule 40 steel pipe 194 positioned horizontally in the array. The length of the pipe is slightly less than 6-7/8 inches (17.46 cm). The first and third row upstream-to-downstream includes five pipes in each row; the second and fourth rows upstream-to-downstream includes a half pipe at each end and four pipes in between. The center-to-center pitch perpendicular to the axis of the duct; i.e., to the direction of fluid flow, is, 1-3/8 inches (3.49 cm) and the center-to-centre pitch along the duct is 1-1/8 inches (2.86 cm). The array 195 is provided with partitions 197 between the pipes 198 of the alternate rows. The partitions are of 16 gauge steel and are spot welded to the first and third and second and fourth rows of pipe centers.

Fly-ash supplied from hopper 199 was introduced into the inlet transition 196 by means of a variable-speed screw feeder 201 at a controlled rate. The fly-ash rate was determined by weighing the fly-ash hopper and feeder assembly 199-201 before and after a timed interval. Water was introduced above the baffle array unit 195 through an impingement-jet spray nozzle 203 at a rate metered by means of a Brooks rotameter. Water was supplied by means of a Dayton centrifugal pump 205, recycling water from a slurry collection tank 207. The slurry collection tank was the bottom portion of a 24-inch (60.96 cm) diameter cyclone separator 209 placed downstream of the vertical test section and connected to receive the slurry from duct 193. The clean air exhaust from the cyclone separator 209 flowed through a 12-inch 30.48 cm diameter duct 211 to the suction side of a Size 15 Cincinnati blower 213, equipped with a 7.5 HP, 3475 RPM motor. Filters 217 were interposed in the liquid recycle circuit. Air flow was controlled by means of a slide damper 215 on the fan suction. The blower 213 produced negative pressure in the duct so that air was induced to flow into the duct vertically downwardly.

To determine the effectiveness of the apparatus according to this invention in removing particulate from gas, the feeder 201 was set to feed fly-ash at a rate of 165.0 grams/minute and the blower 213 was set to feed the air, at 4,300 feet/minute (1310 m/min) face velocity. Pressure drop across the array 195 was 7 inches (17.8 cm) water column. Water was sprayed into the air stream above the array at a rate of 7.6 gallons (34.5 litre) per minute. Pre-weighed filter cartridges 217 mounted in the recycle liquor circuit were used to filter out the fly-ash captured by the liquid and collected in the cyclone 209. The liquid recycle lines and sump 207 were rinsed with fresh water after the test, and the slurry filtered through the cartridge filters. The cartridges were dried and weighed after each run. The total weight of fly-ash collected from the liquor system was then compared with the difference in fly-ash weight of the dry feeder 201 and tank 207. Two consecutive runs made under the same conditions gave an average weight recovery of 98.2%. Inasmuch as the fly-ash samples used in these tests were collected in an electrostatic precipitator at a Duquesne Light Company coal-fired power plant in Pittsburgh, the fly-ash is representative of that normally emitted by a coal-fired utility. The efficiency level of 98.2% obtained in these tests for the removal of this ash from the air is typical of performance of a Venturi scrubber operating at much higher pressure drop (and velocities) on fly-ash. The energy efficiency of this invention for particulate removal is thus seen to be high.

The high efficiency achieved by this invention for particulate removal, may be explained as follows: Water in the form of mist or spray is introduced upstream of the array 195. The gas containing solid particulates and water droplets is accelerated to a high velocity as it enters the constricted areas 198 between the first row of transverse elements 194 and the partitions 197. The gas and the contained fine particulate undergoes a rapid increase in velocity in the constricted regions between the elements and the partitions, but the water droplets, because of their larger mass, gain velocity more slowly. Because of the difference in velocity, there are collisions between the fly-ash particles and water droplets, with the result that the fly-ash particles are captured by the water droplets. This is not a complete process and (uncollided) water drops and uncaptured particulates pass on downstream.

Immediately downstream of the first-row flow area constriction 198, the flow area 202 enlarges, the gas is decelerated, and the above-described process is reversed, with the gas and contained particles losing velocity more rapidly than the water droplets. In addition, a portion of the gas flows in random turbulent eddies in the downstream wake of the elements 197, possessing high-velocity vector components normal to the adjacent partition. The vector components normal to the partition cause penetration through the fluid boundary layers at the partition, enhancing impingement and fluid transport normal to the partition. The second row of elements 194 again forms a gas-accelerating constricted flow area, and the above process repeats itself.

Additional advantages in gas-liquid contacting may be secured by use of transverse elements 194 that are porous, foraminous or perforated. For example, the cylindrical mesh elements of Lerner disclosed in British Patent 1,594,524, or the porous ceramic elements of Andersen, U.S. Patent 3,447,287, or the perforated tubes of British Patent No. 644,391, may be employed as transverse elements. Heat addition to, or removal from, a fluid can also be accomplished in the array of this invention in which the transverse elements 194 are tubular-heating or cooling exchanger elements, finned-tube or plain-tubular elements.

## Claims

**1.** Apparatus for treating fluids for liquid-gas contacting, for removing particulate, mist or fumes from fluids, or for transferring heat or mass between fluids, the said fluids flowing predominantly in a predetermined direction (179), the apparatus including separate cylindrical elements (171, 173) arrayed in a plurality of rows (163, 165, 167, 169) the elements (171, 173) in said rows (163, 165, 167, 169) being substantially perpendicular to said predetermined direction, and the respective elements (171, 173) of adjacent rows (163, 165-165, 167-167, 169) being staggered with respect to one another, the elements (171, 173) of each row (163, 165, 167, 169) being spatially separated from each other and from the elements (171, 173) of adjacent rows, the said apparatus being characterized by that diagonal bypass flow of said fluid is prevented by partitions (189) bridging between at least a plurality of pairs (171, 173) of certain of said elements and extending generally parallel to said predetermined direction, the bridging of each pair by a partition being between a pair of elements in alternate rows (163, 167-165, 169), each said partition (189) being substantially in contact with the outer surfaces of the elements (171, 173) of each said pair which it bridges along the lengths of said bridged elements to interpose substantially complete obstruction to said diagonal bypass flow, there being no row from the surfaces of whose said elements (171, 173) more than one said partition (189) extends.

**2.** The apparatus of claim 1 characterised in that the cylindrical elements are imperforate to the flowing fluid.

**3.** The apparatus of claim 1 characterised in that the entire surface of the cylindrical elements are perforate to the flowing fluid.

**4.** The apparatus of claim 1 characterized in that the partitions (189,) are shaped to minimize the pressure drop of the fluids in the array, and the elements of the rows (165, 167) intervening between alternate rows (163, 167 with respect to 165, and 165, 169 with respect to 167) are positioned generally symmetrically with respect to said partitions, the said apparatus being characterized by that the thickness of each partition is small compared to the minimum distance between the outer surfaces of the pair of elements of the intervening rows through which each partition passes.

**5.** The apparatus of claim 4 characterized in that the thickness of the partition is 5% to 25% of the minimum distance.

**6.** The apparatus of claim 1 characterized in that the cylindrical elements are elongated and are arrayed in a row either with their long axes horizontal, or with their long axes vertical.

**7.** The apparatus of claim 4 characterised in that each bridging partition does not penetrate through the surfaces into elements which it bridges.

**8.** The method of separating solid particulate from a gas with the apparatus of claim 1 which is characterized in injecting a liquid in the gas to form drops of the liquid in addition to the particulate, the liquid drops being of larger mass than the particles of the solid particulate, causing the drops to capture the particles by passing the gas successively through the enlarged and constricted regions (202, 198) between the elements (194) and the partitions (197) thereby to cause an increase in the velocity of the gas as it passes into the constricted regions thereby accelerating the particles to a higher velocity than the drops and reducing the velocity of the gas as it passes from the constricted area into the immediately downstream enlarged area decelerating the particles to a lower velocity that the drops, and removing the drops containing the captured particles.

**9.** Use of the gas-liquid contacting apparatus according to claim 3 for transferring a component in a gas to a liquid, the said apparatus including means for transmitting the component-containing gas through the rows of elements in a direction generally transverse to said rows and means downstream, with respect to the flow of

said gas, of said rows, for injecting a liquid into said rows countercurrent to the flow of said gas; the said gas-transmitting means is of the type which imparts to said gas a flow velocity with a range such that the injected liquid in passing into the elements through the perforations in the elements is held up within said element in a stable pool through which pool said gas bubbles and thereby effectuating the transfer of said component to said liquid in said pool.

**10.** A method of liquid-gas contacting for mass interchange between a gas and a liquid with apparatus in accordance with claim 3 but in which the elements in the rows are positioned horizontally and the partitions do not penetrate into the surface to which they extend; the said method including conducting said gas and said liquid generally vertically through an array of rows of elements in a direction generally transverse to said rows, with partitions interposed between certain of said elements to suppress crossflow through said array, said gas being conducted upwardly and said liquid being conducted downwardly, reacting said gas and liquid to produce mass interchange, and conducting away said gas as modified by the mass interchange; the said method being characterised by that the gas is conducted at so high a velocity as to maintain retention of the liquid in a pool in the elements and that the gas and liquid are reacted in the pool with the gas bubbling in the pool.

**11.** A method of mixing at least a first fluid and a second fluid with apparatus according to claim 1; the said method including: transmitting said first fluid through an array (21) of elements (23), transmitting said second fluid through said array, said fluids being transmitted over the exterior surfaces of the elements, and by means of partitions (29) interposed between certain of the elements (23) of the array, repeatedly subdividing the streams into substreams of the first and second fluids (35 into 43, 45; 43 plus 45 into 47, 49; 47 plus 49 into 55, 57) as they flow upstream to downstream, and recombining substreams produced by adjacent partitions downstream of the adjacent partitions.

**Patentansprüche**

**1.** Vorrichtung zum Behandeln von Fluiden für die Flüssigkeits-Gas-Kontaktierung zur Entfernung von teilchenförmigen, nebelförmigen oder rauchförmigen Stoffen aus Fluiden oder zur Übertragung von Wärme oder Masse zwischen Fluiden, wobei die Fluide hauptsächlich in einer vorbestimmten Richtung (179) strömen, die Vorrichtung gesonderte, zylindrische Elemente (171, 123) umfaßt, welche in einer Mehrzahl von Reihen (163, 165, 167, 169) angeordnet sind, die Elemente (171, 173) in den Reihen (163, 165, 167, 169) im wesentlichen senkrecht zu der vorbestimmten Richtung sind, und die zugeordneten Elemente (171, 173) der benachbarten Reihen (163, 165-165, 167-167, 169) bezüglich einander versetzt angeordnet sind und die Elemente (171, 173) jeder Reihe (163, 165, 167, 169) räumlich voneinander und von den Elementen (171, 173) der benachbarten Reihen angeordnet sind, welche Vorrichtung sich dadurch auszeichnet, daß ein diagonaler Bypass-Strom des Fluids durch Zwischenwände (189) verhindert wird, welche eine Brücke zwischen wenigstens einer Mehrzahl von Paaren (171, 173) gewisser dieser Elemente bilden, und im allgemeinen parallel zu der vorbestimmten Richtung verlaufen, die Brückenbildung zwischen jedem Paar durch eine Zwischenwand zwischen einem Paar von Elementen in abwechselnden Reihen (163, 167 - 165, 169) erfolgt; jede Zwischenwand (189) im wesentlichen in Kontakt mit den äußeren Flächen der Elemente (171, 173) jedes der beiden Elemente ist, welche sich entlang den Längserstrekkungen der überbrückenden Elemente überbrücken, um dazwischen eine im wesentlichen vollständige Absperrung für einen diagonalen Bypass-Strom zu bilden, und daß keine Reihe vorhanden ist, von deren Oberfläche der Elemente (171, 173) sich mehr als eine Zwischenwand (189) erstreckt.

**2.** Vorrichtung nach Anspruch 1, **dadurch gekennzeichnet**, daß die zylindrischen Elemente für das strömende Fluid undurchlässig sind.

**3.** Vorrichtung nach Anspruch 1, **dadurch gekennzeichnet**, daß die gesamte Oberfläche der zylindrischen Elemente für das strömende Fluid durchlässig ist.

**4.** Vorrichtung nach Anspruch 1, **dadurch gekennzeichnet**, daß die Zwischenwände (189) derart ausgebildet sind, daß der Druckabfall der Fluide in der Anordnung möglichst klein ist, die Elemente der Reihe (165, 167) zwischen abwechselnden Reihen (163, 167 bezüglich 165, und 165, 169 bezüglich 167) im allgemeinen symmetrisch bezüglich den Zwischenwänden angeordnet sind, und daß sich die Vorrichtung dadurch auszeichnet, daß die Dicke jeder Zwischenwand im Vergleich zu

dem kleinsten Abstand zwischen den äußeren Flächen des Paars von Elementen der dazwischenliegenden Reihen, durch die die jeweilige Zwischenwand geht, klein ist.

5. Vorrichtung nach Anspruch 4, **dadurch gekennzeichnet**, daß die Dicke der Zwischenwand 5 % bis 25 % des kleinsten Abstandes beträgt.

6. Vorrichtung nach Anspruch 1, **dadurch gekennzeichnet**, daß die zylindrischen Elemente länglich ausgebildet sind, und daß sie in einer Reihe entweder mit ihren Längsachsen horizontal oder mit ihren Längsachsen vertikal ausgerichtet angeordnet sind.

7. Vorrichtung nach Anspruch 4, **dadurch gekennzeichnet**, daß jede Überbrückungszwischenwand nicht durch die Oberflächen in die Elemente geht, welche sie überbrückt.

8. Verfahren zum Separieren von teilchenförmigen Feststoffen von einem Gas mit der Vorrichtung nach Anspruch 1, welche sich dadurch auszeichnet, daß eine Flüssigkeit in das Gas zur Bildung von Flüssigkeitstropfen zusätzlich zu den teilchenförmigen Stoffen eingespritzt wird, die Flüssigkeitsstropfen eine größere Masse als die Teilchen des teilchenförmigen Feststoffes haben, wodurch bewirkt wird, daß die Tropfen die Teilchen dadurch einfangen, daß das Gas sukzessiv durch die erweiterten und verengten Bereiche (202, 198) zwischen den Elementen (194) und den Zwischenwänden (197) durchgeleitet wird, wodurch eine Vergrößerung der Geschwindigkeit des Gases bewirkt wird, wenn dieses durch die verengten Bereiche geht, wodurch die Teilchen auf eine höhere Geschwindigkeit als die Tropfen beschleunigt werden, und die Geschwindigkeit des Gases beim Durchgang von dem verengten Bereich zu dem unmittelbar stromab angrenzenden vergrößerten Bereich herabgesetzt wird, wodurch die Teilchen auf eine niedrigere Geschwindigkeit als die Tropfen verlangsamt werden, und daß die eingefangene Teilchen enthaltenden Tropfen abgeführt werden.

9. Verwendung der Gas-Flüssigkeits-Kontaktiervorrichtung nach Anspruch 3 zur Übertragung einer Komponente in einem Gas zu einer Flüssigkeit, wobei die Vorrichtung eine Einrichtung zum Übertragen des die Komponente enthaltenden Gases durch die Reihe von Elementen in einer Richtung im wesentlichen quer zu den Reihen und eine Einrichtung stromab bezüglich der Gasströmung der Reihen zum Einspritzen einer Flüssigkeit in die Reihen im Gegenstrom zu dem Gasstrom umfaßt, und wobei die gasübertragende Einrichtung derart ausgelegt ist, daß sie dem Gas eine Strömungsgeschwindigkeit in einem solchen Bereich erteilt, daß die eingespritzte Flüssigkeit in die Elemente durch die Öffnungen in den Elementen gelangt und in dem Element mit einem stabilen Pool gehalten wird, durch welchen Pool das Gas in Blasen aufsteigt und hierdurch die Übertragung der Komponente zu der Flüssigkeit in dem Pool bewirkt wird.

10. Verfahren zum Flüssigkeits-Gas-Kontaktieren zum Massenaustausch zwischen einem Gas und einer Flüssigkeit mit der Vorrichtung nach Anspruch 3, bei welcher aber die Elemente in den Reihen horizontal angeordnet sind, und die Zwischenwände nicht in die Oberfläche eindringen, zu der sie sich erstrecken, wobei dieses Verfahren umfaßt, daß das Gas und die Flüssigkeit im allgemeinen vertikal durch eine Anordnung von Reihen von Elementen in einer Richtung im wesentlichen quer zu den Reihen geleitet werden, Zwischenwände zwischen gewissen Elementen angeordnet sind, um eine Querströmung durch die Anordnung zu unterdrücken, das Gas nach oben und die Flüssigkeit nach unten geleitet wird, das Gas und die Flüssigkeit zur Erzeugung eines Massenaustausches zur Reaktion gebracht werden, und das Gas nach der Modifizierung durch den Massenaustausch weggeleitet wird, wobei sich das Verfahren dadurch auszeichnet, daß das Gas mit einer derart hohen Geschwindigkeit geleitet wird, daß die Retention der Flüssigkeit in einem Pool in den Elementen aufrechterhalten wird, und daß das Gas und die Flüssigkeit in dem Pool zur Reaktion gebracht werden und das Gas in Blasen im Pool aufsteigt.

11. Verfahren zum Vermischen wenigstens eines ersten Fluids und eines zweiten Fluids mit der Vorrichtung nach Anspruch 1, wobei das Verfahren folgendes umfaßt: Durchleiten des ersten Fluids durch eine Anordnung (21) der Elemente (23), Durchleiten des zweiten Fluids durch die Anordnung, die Fluide über die äußeren Oberflächen der Elemente geleitet werden und mit Hilfe der Zwischenwände (29), welche zwischen gewissen Elementen (23) der Anordnung angeordnet sind, die Ströme wiederholt in Unterströme aus ersten und zweiten Fluiden (35 in 43, 45; 43 plus 45 in 47, 49; 47 plus 49 in 55, 57) unterteilt werden, wenn sie von oben nach unten strömen, und rekombinieren der von benachbarten Zwischenwänden erzeugten Unterströme bzw. Teilströme stromabwärts von den benachbarten Zwischenwänden.

**Revendications**

1. Appareil pour traiter des fluides pour mise en contact liquide-gaz, pour éliminer des fluides les particules, brouillards ou vapeurs, ou pour transférer de la chaleur ou une masse entre fluides, lesdits fluides s'écoulant de façon prédominante dans une direction prédéterminée (**179**), l'appareil comportant des éléments cylindriques séparés (**171**, **173**) aménagés en réseau de plusieurs lignes (**163**, **165**, **167**, **169**), les éléments (**171**, **173**) desdites lignes (**163**, **165**, **167**, **169**) étant sensiblement perpendiculaires à ladite direction prédéterminée, et les éléments respectifs (**171**, **173**) des lignes adjacentes (**163**, **165-165**, **167-167**, **169**) étant décalés les uns par rapport aux autres, les éléments (**171**, **173**) de chaque ligne (**163**, **165**, **167**, **169**) étant séparés dans l'espace entre eux et avec les éléments (**171**, **173**) des lignes adjacentes, ledit appareil étant caractérisé par ce que l'écoulement de traversée diagonal dudit fluide est empêché par des cloisonnages (**189**) reliant au moins plusieurs paires (**171**, **173**) de certains desdits éléments et s'étendant généralement parallèlement à ladite direction prédéterminée, la liaison de chaque paire par un cloisonnage s'effectuant entre une paire d'éléments situés dans des lignes alternées (**163**, **167-165**, **169**), chaque dit cloisonnage (**189**) étant sensiblement en contact avec les surfaces externes des éléments (**171**, **173**) de chaque dite paire qu'il relie le long des longueurs desdits éléments reliés afin d'interposer une obstruction sensiblement complète audit écoulement de traversée diagonal, sur aucune ligne provenant des surfaces desdits éléments (**171**, **173**) plus d'un desdits cloisonnages (**189**) ne s'étendant.

2. Appareil selon la revendication 1, caractérisé en ce que les éléments cylindriques ne laissent pas passer le fluide qui s'écoule.

3. Appareil selon la revendication 1, caractérisé en ce que la surface entière des éléments cylindriques laisse passer le fluide qui s'écoule.

4. Appareil selon la revendication 1, caractérisé en ce que les cloisonnages (**189**) sont constitués de façon à minimiser la chute de pression des fluides dans le réseau, et les éléments des lignes (**165**, **167**) intermédiaires entre les lignes alternées (**163**, **167** par rapport à **165**, et **165**, **169** par rapport à **167**) sont placés de façon généralement symétrique par rapport auxdits cloisonnages, ledit appareil étant caractérisé en ce que l'épaisseur de chaque cloisonnage est faible par rapport à la distance minimum entre les surfaces externes de la paire d'éléments des lignes intermédiaires à travers lesquelles passe chaque cloisonnage.

5. Appareil selon la revendication 4, caractérisé en ce que l'épaisseur du cloisonnage est de 5% à 25% de la distance minimum.

6. Appareil selon la revendication 1, caractérisé en ce que les éléments cylindriques sont allongés et sont aménagés en réseau en lignes soit avec leurs axes longs horizontaux, ou avec leurs axes longs verticaux.

7. Appareil selon la revendication 4, caractérisé en ce que chaque cloisonnage de liaison ne pénètre pas à travers les surfaces dans les éléments qu'il relie.

8. Procédé de séparation de particules solides d'un gaz avec l'appareil de la revendication 1 qui est caractérisé par l'injection d'un liquide dans le gaz pour former des gouttes de liquide qui s'ajoutent aux particules, les gouttes de liquide étant de masse plus grande que les éléments des particules solides, provoquant la capture par les gouttes des particules en faisant passer le gaz successivement à travers les zones agrandies et rétrécies (**202**, **198**) entre les éléments (**194**) et les cloisonnages (**197**), provoquant par ce moyen une augmentation de la vitesse du gaz lorsqu'il passe dans les zones rétrécies, accélérant ainsi les particules jusqu'à une vitesse plus grande que les gouttes et diminuant la vitesse du gaz lorsqu'il passe de la zone rétrécie à la zone agrandie située immédiatement en aval, en décélérant les particules jusqu'à une vitesse plus faible que les gouttes, et en éliminant les gouttes contenant les particules capturées.

9. Utilisation de l'appareil de mise en contact gaz-liquide selon la revendication 3, pour transférer un composant d'un gaz à un liquide, ledit appareil comportant un moyen pour transmettre le gaz contenant un composant à travers les lignes d'éléments dans une direction généralement transversale auxdites lignes et un moyen vers l'aval desdites lignes, par rapport à l'écoulement dudit gaz, pour injecter un liquide dans lesdites lignes à contre-courant de l'écoulement dudit gaz; ledit moyen de transmission de gaz est du type qui communique audit gaz une vitesse d'écoulement située dans une gamme telle que le liquide injecté en passant dans les éléments à travers les perforations situées dans les éléments est maintenu à l'intérieur dudit élément dans un bain stable à travers lequel se groupent lesdites bulles de gaz et effectuant par ce moyen le transfert dudit composant vers ledit liquide dans ledit bain.

**10.** Procédé de mise en contact liquide-gaz pour échange de masse entre un gaz et un liquide avec un appareil selon la revendication 3 mais dans lequel les éléments des lignes sont placés horizontalement et les cloisonnages ne pénètrent pas dans la surface sur laquelle ils s'étendent; ledit procédé comportant la conduction dudit gaz et dudit liquide généralement verticalement à travers un motif de lignes d'éléments dans une direction généralement transversale auxdites lignes, avec des cloisonnements interposés entre certains desdits éléments afin de supprimer l'écoulement croisé à travers ledit réseau, ledit gaz étant conduit vers le haut et ledit liquide étant conduit vers le bas, faisant réagir lesdits gaz et liquide afin de produire un échange de masse, et conduisant en dehors ledit gaz modifié par l'échange de masse; ledit procédé étant caractérisé par ce que le gaz est conduit à une vitesse suffisante pour assurer la rétention de liquide dans un bain dans les éléments et que le gaz et le liquide réagissent dans le bain avec les bulles de gaz situées dans le bain.

**11.** Procédé de mélange d'au moins un premier fluide et d'un second fluide avec un appareil selon la revendication 1; ledit procédé comportant; la transmission dudit premier fluide à travers un réseau (**21**) d'éléments (**23**), la transmission dudit second fluide à travers ledit réseau, lesdits fluides étant transmis sur les surfaces extérieures des éléments, et au moyen de cloisonnages (**29**) interposés entre certains des éléments (**23**) du réseau, en subdivisant les courants de façon répétée en sous-courants du premier et du second fluide (**35** en **43**, **45**; **43** plus **45** en **47**, **49**; **47** plus **49** en **55**, **57**) lorsqu'ils s'écoulent d'amont en aval, et en réassociant les sous-courants produits par les cloisonnages adjacents, en aval des cloisonnages adjacents.

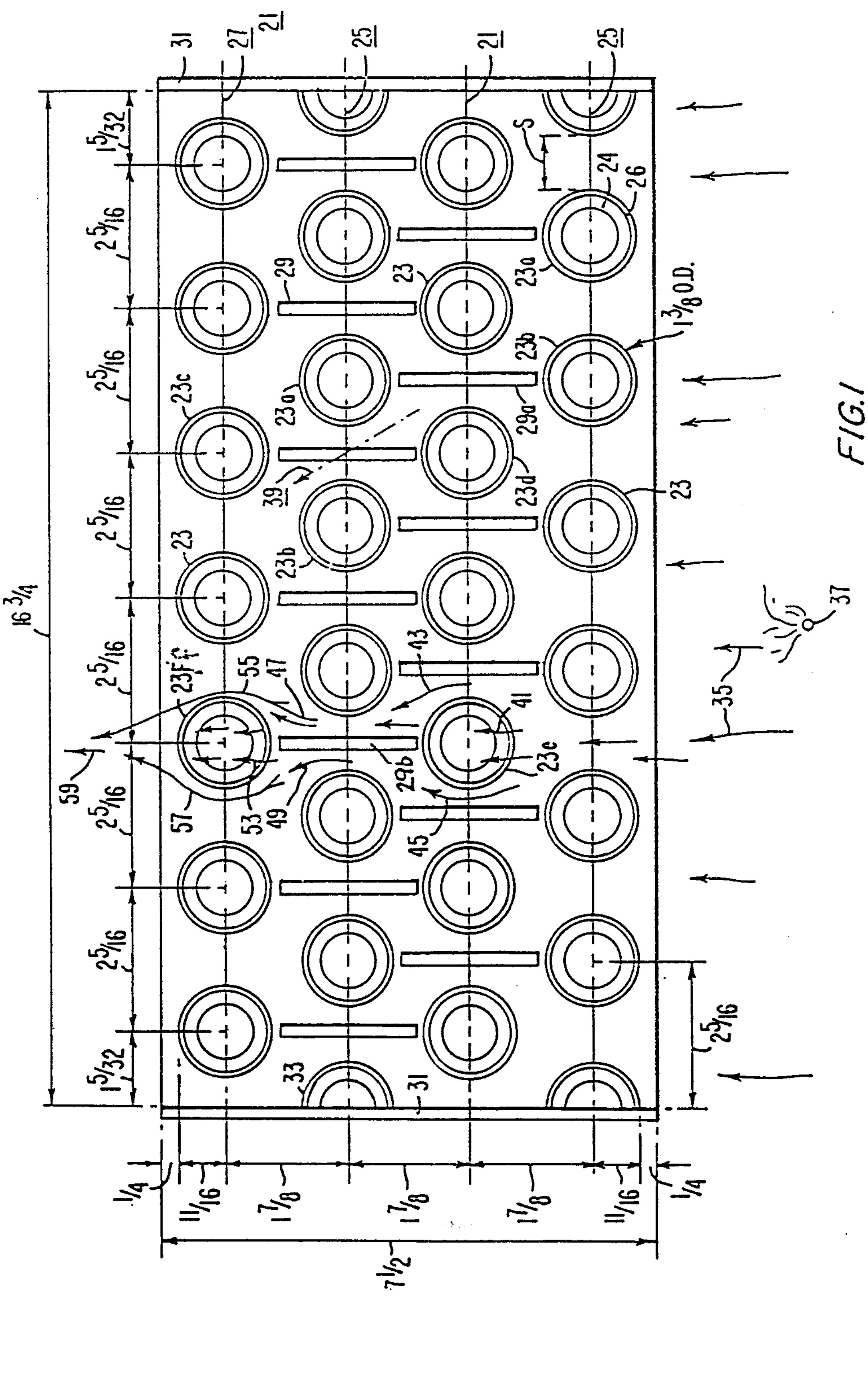

21
27
31
25
23
23a
23b
23c
23d
23e
23F
24
26
S
29
29a
29b
33
35
37
39
41
43
45
47
49
53
55
57
59
1 3/8 O.D.
16 3/4
1 5/32
2 5/16
1/4
11/16
1 7/8
7 1/2


FIG.1

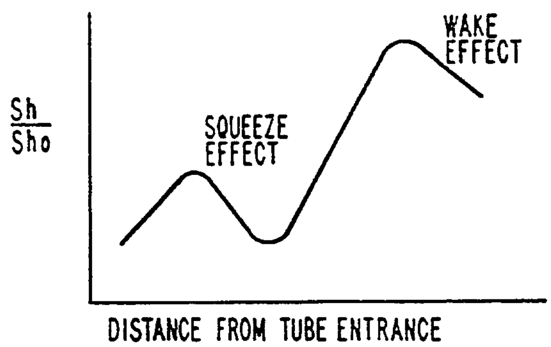
Sh/Sho
SQUEEZE EFFECT
WAKE EFFECT
DISTANCE FROM TUBE ENTRANCE

FIG. 3

FIG 2

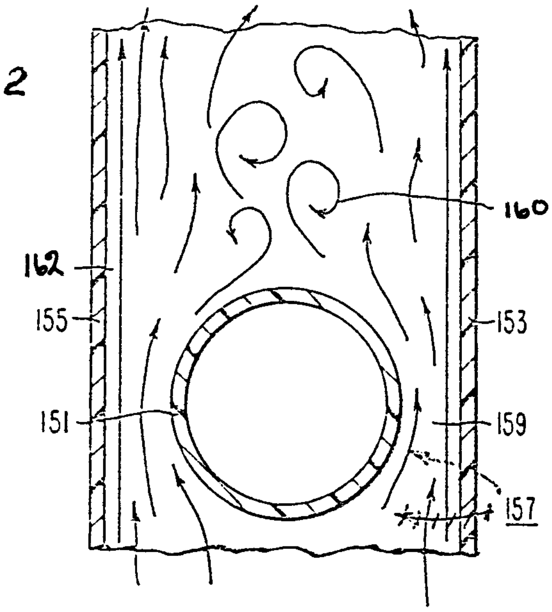
160
162
155
153
151
159
157

FIG. 5

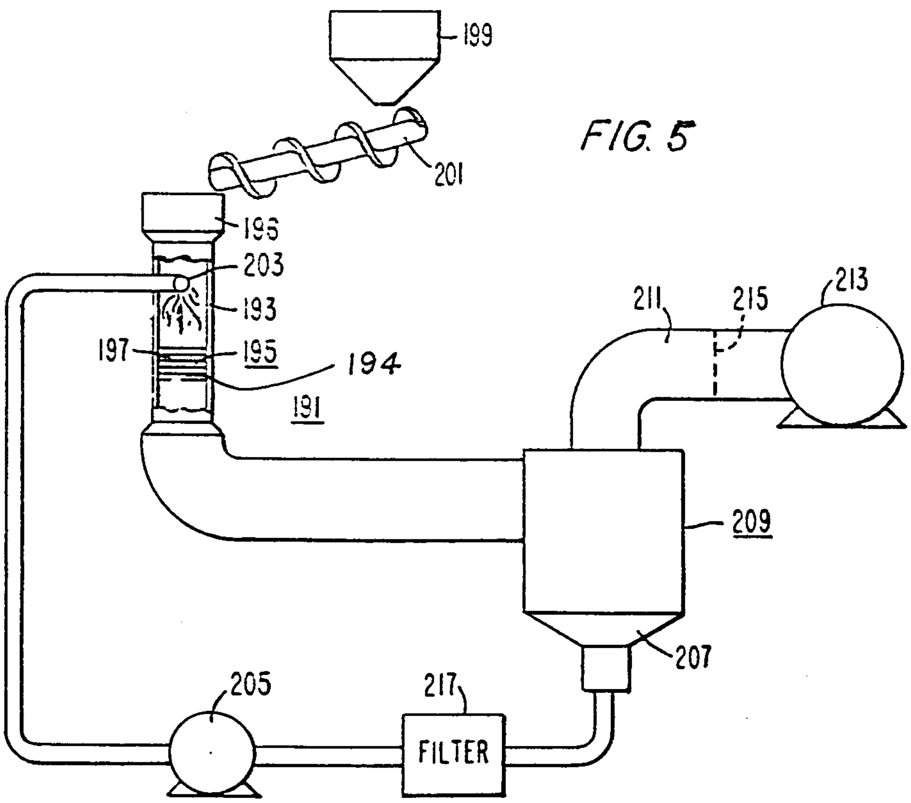
199
201
196
203
193
197
195
194
191
211
215
213
209
207
205
217
FILTER

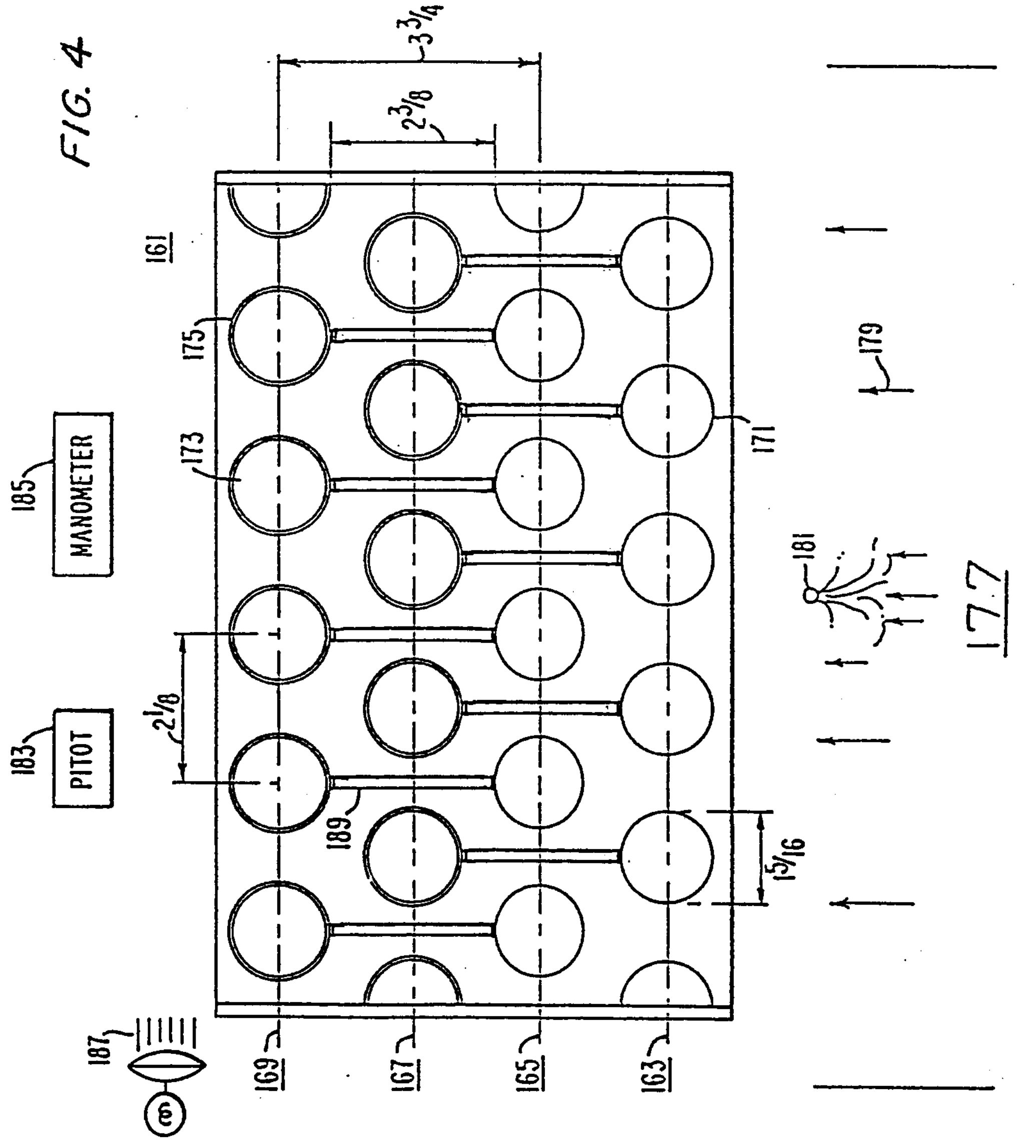

PITOT
MANOMETER
183
185
187
161
163
165
167
169
171
173
175
177
179
181
189
2 1/8
2 3/8
3 3/4
15/16


FIG. 4